# EUROPÄISCHE PATENTSCHRIFT

(11) **EP 4 025 816 B1**
(45) Veröffentlichungstag und Bekanntmachung des Hinweises auf die Patenterteilung: **31.12.2025**
(21) Anmeldenummer: 20760846.4
(22) Anmeldetag: 21.08.2020
(51) Int. Cl.: G01K 13/02, G01K 1/14, G01K 7/18, F16L 11/00

(54) **SCHLAUCHSYSTEM MIT MITTELN ZUR ERFASSUNG DER TEMPERATUR IM SCHLAUCHINNEREN**
HOSE SYSTEM HAVING MEANS FOR DETECTING THE TEMPERATURE INSIDE THE HOSE
SYSTÈME DE TUYAU SOUPLE POURVU DE MOYENS DE DÉTECTION DE LA TEMPÉRATURE À L'INTÉRIEUR DU TUYAU

(30) Priorität: 02.09.2019 DE 102019213235
(43) Veröffentlichungstag der Anmeldung: 13.07.2022
(73) Patentinhaber: ContiTech Schlauch GmbH, 30165 Hannover (DE)
(72) Erfinder: SCHMIDT, Alexander, 30419 Hannover (DE)
(74) Vertreter: Preusser, Andrea
(86) Internationale Anmeldenummer: PCT/EP2020/073483
(87) Internationale Veröffentlichungsnummer: WO 2021/043598

(56) Entgegenhaltungen:
- EP-A2- 0 097 901
- WO-A1-2011/015362
- DE-A1- 10 152 799
- DE-A1- 102015 113 238
- US-A1- 2015 069 044

## Beschreibung

Die vorliegende Erfindung betrifft ein Schlauchsystem mit Mitteln zur Erfassung der Temperatur im Schlauchinneren.

Aus dem Stand der Technik ist es bekannt, in der Wandung eines Schlauchs Sensoren vorzusehen, mit denen die Temperatur im Inneren eines Schlauchs bestimmt werden kann. So ist beispielsweise aus der EP 2 434 195 A1 bekannt, entlang der Schlauchwandung zwei Drähte aus unterschiedlichen Materialien zu führen, deren Enden miteinander verbunden sind, um ein Thermoelement zu bilden. Zur Bestimmung der Temperatur in dem Schlauch wird die Thermospannung zwischen den beiden Drähten gemessen. Ein solcher Aufbau ist zum einen kompliziert einzubringen und zum anderen wird dadurch die Temperatur in der Umgebung der Verbindung der beiden Drähte bestimmt und nicht etwa über die gesamte Länge des Schlauchs gemittelt.

Darüber hinaus ist es bekannt, beispielsweise RFID-Chips in der Wandung des Schlauchs vorzusehen, die mit einem Temperatursensor verbunden sind. Dies hat jedoch den Nachteil, dass die Chips mit den Sensoren schwierig in die Wandung des Schlauchs einzubringen sind. Insbesondere ist ein solches Einbringen kompliziert in den herkömmlichen Herstellungsprozess zu integrieren. Insbesondere ergibt sich das Problem, dass die RFID-Chips wegen der Abmessungen des Chips samt Sensor und Antenne eine Schwachstelle im Schlauch darstellen und den Ausgangspunkt für Risse im Schlauch bilden können.

Allerdings ist es häufig erforderlich, die Temperatur des Mediums im Schlauchinneren zu bestimmen. Dies kann einerseits während des normalen Betriebs relevant sein um zu überwachen, ob der Schlauch während des Betriebs nicht zu hohen thermischen Belastungen ausgesetzt ist. Darüber hinaus kann es auch insbesondere im Lebensmittelbereich erforderlich sein, die Temperatur des Schlauchinneren bei einem Reinigungsprozess zu überwachen um sicherzustellen, dass im Inneren des Schlauchs während der Reinigung eine gewisse Mindesttemperatur erreicht worden ist. Schließlich erlaubt die Überwachung der thermischen Belastung, Rückschlüsse auf die verbleibende Lebensdauer des Schlauches ziehen.

Die DE 101 52 799 A1 beschreibt einen Schlauch zum Leiten von Flüssigkeit, wie Heißschmelzklebemittel, innerhalb einem vorbestimmten, erhöhten Temperaturbereich. Der Schlauch beinhaltet eine Röhre oder einen Körperabschnitt, welche(r) ein Verbinden mit einer Flüssigkeitsquelle, wie einem Vorratstank, ausgebildetes Einlassende und ein zum Verbinden mit einer Flüssigkeitsabgabevorrichtung, wie eine Klebstoffverteilpistole, ausgebildetes Auslassende aufweist. Wenigstens zwei Temperaturerfassungsvorrichtungen, jede ein Ausgangsende aufweisend, sind funktional der Röhre zugeordnet, um die Temperatur der Flüssigkeit darin zu erfassen. Ein Adapter hat ein erstes Ende, welches wahlweise mit dem Ausgangsende der ersten Temperaturerfassungsvorrichtung verbunden wird. Der Adapter hat auch ein zweites Ende, welches zum Verbinden mit einem Regler, welcher mit der ersten Temperaturerfassungsvorrichtung, jedoch nicht mit der zweiten Temperaturerfassungsvorrichtung kompatibel ist, ausgebildet ist. Wird die erste Temperaturerfassungsvorrichtung mit dem Adapter verbunden, ist sie betriebsbereit zum Erfassen der Temperatur der Flüssigkeit in der Röhre. Dahingegen ist die zweite Temperaturerfassungsvorrichtung, da sie nicht mit dem Adapter verbunden ist, inaktiv und stellt keine Temperaturinformation bezüglich der Flüssigkeit in der Röhre bereit.

Die EP 0 097 901 A2 beschreibt einen Wellschlauch oder eine Schlauchwendel mit einem mechanischen Stützelement in Form einer Drahtwendel, deren Enden herausgeführt und mit elektrischen Anschlusselementen versehen sind. Die Drahtwendel dient so, an eine regelbare Stromquelle angeschlossen, als Heizwiderstand, um die Schlauchleitung bzw. das durch sie geförderte Gut zu erwärmen oder auf einer vorgegebenen Temperatur zu halten. Dazu kann die Drahtwendel auch noch als Messwiderstand einer auf die speisende Stromquelle wirkenden Temperaturmess- und -regeleinrichtung eingesetzt werden.

Die US 2015/069044 A1 beschreibt ein Heizsystem für ein Fluid-Leitungssystem, wobei zumindest einer Fluidleitung mindestens ein elektrisches Heizelement zugeordnet ist, das zur Beaufschlagung der Fluidleitung mit einer vorbestimmten Heizleistung mit einer elektrischen Betriebsspannung versorgt wird, wobei das Heizelement mittels eines elektronischen Steuergliedes zur Einstellung oder Regelung seiner Heizleistung mit einem bestimmten, oder variablen Tastverhältnis pulsweitenmoduliert getaktet angesteuert wird. Die Temperatur des elektrischen Heizelements kann durch Anlegen einer elektrischen Spannung bestimmt werden.

Vor diesem Hintergrund ist es die Aufgabe der vorliegenden Erfindung, ein Schlauchsystem bereitzustellen, dass es ermöglicht, die Temperatur im Inneren des Schlauchs zu erfassen und einfach herzustellen ist.

Diese Aufgabe wird durch ein Schlauchsystem mit den Merkmalen des Anspruchs 1 gelöst.

Das erfindungsgemäße Schlauchsystem umfasst zum einen einen Schlauch, der sich zwischen einem ersten und einem zweiten Ende erstreckt, wobei der Schlauch eine Wandung aufweist und wobei in der Wandung ein Leiterelement eingelassen ist, das sich wiederum zwischen dem ersten und dem zweiten Ende erstreckt. Das Leiterelement ist aus einem elektrisch leitfähigen Material mit einem temperaturabhängigen spezifischen Widerstand ausgebildet, wobei das Leiterelement einen ersten elektrischen Anschluss und einen zweiten elektrischen Anschluss aufweist, die entlang des Leiterelements voneinander beabstandet sind.

Zum anderen weist das erfindungsgemäße Schlauchsystem eine Messeinrichtung auf, die mit dem ersten und dem zweiten elektrischen Anschluss an dem Leiterelement verbunden ist und die ausgestaltet ist, aus einem elektrischen Signal, das zwischen dem ersten und dem zweiten elektrischen Anschluss durch die Messeinrichtung erfasst wird, ein Ausgangssignal zu erzeugen, das ein Maß für den elektrischen Widerstand des Leiterelements zwischen dem ersten elektrischen Anschluss und dem zweiten elektrischen Anschluss ist.

Bei dem erfindungsgemäßen Schlauchsystem wird ausgenutzt, dass sich der Widerstand des Leiterelements, das sich in der Wandung des Schlauchs erstreckt, in Abhängigkeit von der Temperatur verändert. Diese Änderung des Widerstandes wird mit Hilfe der Messeinrichtung erfasst, wobei diese zunächst ein Signal ausgibt, das ein Maß für den Widerstand des Leiterelements ist, so dass aus diesem Signal wiederum auf die Temperatur im Inneren des Schlauchs geschlossen werden kann.

Das Leiterelement kann in einfacher Weise in die Wandung des Schlauchs eingebracht werden, wobei es nicht erforderlich ist, einen zusätzlichen Herstellungsschritt vorzusehen. Vielmehr kann das Einbringen des Leiterelements in die herkömmliche Herstellung eines Schlauchs integriert werden.

Schließlich hat die erfindungsgemäße Ausgestaltung den Vorteil, dass durch die Widerstandsänderung zwischen dem ersten elektrischen Anschluss und dem zweiten elektrischen Anschluss die Temperatur gemittelt über den Bereich zwischen den beiden Anschlüssen erfasst wird. Dadurch ermöglicht das erfindungsgemäße Schlauchsystem, die Temperatur nicht nur an einem bestimmten Punkt zu erfassen, sondern es wird notwendigerweise über einen größeren Bereich gemittelt, so dass Messartefakte vermieden werden können.

Bei dem erfindungsgemäßen Schlauchsystem ist es ferner nicht notwendig, dass sich das Leiterelement gradlinig zwischen dem ersten Ende des Schlauchs und dessen zweitem Ende erstreckt. Es ist insbesondere denkbar, dass das Leiterelement helixförmig entlang der Schlauchwandung verläuft und/oder dass das Leiterelement in mehreren Abschnitten von dem ersten Ende zunächst zu dem zweiten Ende, dann zurück zu dem ersten und ggf. sogar wieder zu dem zweiten Ende verläuft. Dabei steht es offen, wo der erste elektrische Anschluss und der zweite elektrische Anschluss vorgesehen werden. Dadurch, dass das Leiterelement in mehreren Abschnitten zwischen dem ersten und dem zweiten Ende des Schlauchs verlaufen kann, ist es auch denkbar, dass die Anschlüsse an einem Ende des Schlauchs vorgesehen sind. Die Erfindung ist aber nicht auf eine solche Anordnung beschränkt. Vielmehr kann es zunächst offenbleiben, wieweit die elektrischen Anschlüsse entlang des Leiterelements voneinander beabstandet sind.

In einer bevorzugten Ausführungsform ist die Messeinrichtung des erfindungsgemäßen Schlauchsystems derart ausgestaltet, dass aus dem Ausgangssignal ein Temperatursignal erzeugt wird, das ein Maß für die Temperatur des Leiterelements zwischen dem ersten und dem zweiten elektrischen Anschluss ist. Insbesondere kann die Messeinrichtung ausgestaltet sein, aus dem Ausgangssignal, das ein Maß für den Widerstand ist, ein Signal zu berechnen, dass proportional zu der Temperatur ist, so dass die Temperatur beispielsweise auf einer Anzeige angezeigt werden kann. Ferner kann bei der Ermittlung des Temperatursignals auch berücksichtigt werden, dass das Leiterelement in die Wandung des Schlauchs eingelassen ist und daher die Temperatur eines Fluides in dem Schlauch nur indirekt erfasst wird. Um ein Signal zu erhalten, dass ein Maß für das Verhalten der Temperatur des Fluides in dem Schlauch ist, können bei der Bestimmung des Temperatursignals auch die Wärmeleiteigenschaften der Schichten des Schlauch mit eingehen.

Weiterhin ist es bevorzugt, wenn das Leiterelement drahtförmig ausgestaltet ist. Dies bedeutet, dass das Leiterelement eine sehr viel größere Abmessung in Erstreckungsrichtung als in der Richtung senkrecht dazu aufweist. Drahtförmiges Material kann in einfacher Weise in die Wandung eines Schlauchs eingebracht werden.

In weiter bevorzugter Weise ist das Leiterelement als eine Stahlwendel ausgestaltet, die sich vorzugsweise helixförmig in der Wandung des Schlauchs erstreckt.

Alternativ ist es in einer anderen bevorzugten Ausführungsform jedoch auch möglich, dass das Leiterelement als ein Geflecht ausgebildet ist, das in die Wandung des Schlauchs eingebracht ist. In diesem Fall dient das Leiterelement nicht nur zur Erfassung der Temperatur, sondern übernimmt gleichzeitig die Funktion, die Druckbeständigkeit des Schlauchs zu erhöhen.

Weiterhin ist es bevorzugt, wenn das Leiterelement als Verstärkungselement ausgebildet ist, so dass die Wandung des Schlauchs versteift ist und der Schlauch hat eine Unterdruckstabilität, bezogen auf Raumtemperatur, von mehr als -0,5 bar (rel.) und weiter bevorzugt von bis zu -0,95 bar (rel.). Wenn also der Druck in der Umgebung größer ist als im Inneren des Schlauchs, wird dieser dann nicht kollabieren, sondern seine Querschnittsform im Wesentlichen beibehalten, so dass weiterhin Medium durch den Schlauch strömen kann.

Bei einer solchen Ausgestaltung dient das Leiterelement nicht nur dazu, über dessen Widerstandsänderung die Temperatur im Inneren des Schlauchs zu erfassen, sondern es hat gleichzeitig eine Verstärkungsfunktion. Damit können durch ein und dasselbe Element zwei Funktionen gleichzeitig erreicht werden, was die erfindungsgemäße Ausgestaltung des Schlauchs besonders kostengünstig macht.

Erfindungsgemäß weist das Leiterelement einen ersten und einen zweiten Abschnitt auf, wobei sich sowohl der erste Abschnitt als auch der zweite Abschnitt von dem ersten zu dem zweiten Ende des Schlauchs erstrecken, wobei der erste Abschnitt und der zweite Abschnitt im Bereich des ersten Endes elektrisch miteinander verbunden sind und wobei am Ende des ersten Abschnitts das am zweiten Ende des Schlauchs angeordnet ist, der erste elektrische Anschluss ausgebildet ist und am Ende des zweiten Abschnitts das am zweiten Ende des Schlauchs ausgebildet ist, der zweite elektrische Anschluss ausgebildet ist.

Bei dieser Ausgestaltung werden die beiden Abschnitte des Leiterelements am ersten Ende des Schlauchs miteinander kurzgeschlossen, und die beiden elektrischen Anschlüsse sind sodann am zweiten Ende vorgesehen. Es ist dann nicht erforderlich, entfernt von den Enden des Schlauchs elektrische Anschlüsse in der Wandung vorzusehen, sondern beide Anschlüsse können an einem Ende, an dem gegebenenfalls auch ein Kupplungselement für den Schlauch vorgesehen ist, ausgebildet sein, was den Anschluss des Schlauchs an die Messeinrichtung vereinfacht. Darüber hinaus kann dann der Widerstand über die doppelte Länge des Schlauchs erfasst werden, so dass der Widerstand über eine große Länge bestimmt wird, was wiederum zu einer hohen Messgenauigkeit in Bezug auf die Temperatur führt.

Weiterhin kann in einer bevorzugten Ausführungsform die Wandung des Schlauchs eine Innenschicht und eine Außenschicht aufweisen, wobei die Innenschicht an das Schlauchinnere angrenzt bzw. diese begrenzt und wobei die Außenschicht an der von dem Schlauchinneren abgewandten Seite der Innenschicht anliegt. Ferner ist das Leiterelement zwischen der Innenschicht und der Außenschicht angeordnet. Bei einem solchen Aufbau wird die Herstellung besonders vereinfacht, weil es lediglich erforderlich ist, das Leiterelement zwischen den Schichten einzubringen, was einfach in einem herkömmlichen Herstellungsprozess integriert werden kann. Hierbei ist darauf hinzuweisen, dass sowohl die Innenschicht als auch die Außenschicht selber wiederum mehrschichtig aufgebaut sein können.

Insbesondere können die Außenschicht und die Innenschicht jeweils durch einen helixförmig gewickelten Streifen gebildet sein, so dass das Leiterelement in einfacher Weise einen sogenannten Wickelschlauch integriert werden kann. Es ist aber auch möglich, dass die Innen- und/oder die Außenschicht extrudiert werden, sodass Kombinationen aus gewickelten und extrudierten Schichten ebenfalls möglich sind.

Erfindungsgemäß weist die Messeinrichtung zusätzlich einen weiteren Temperatursensor auf, der ausgebildet ist, die Temperatur der Umgebung des Schlauchs zu erfassen. Dies ermöglicht, dass die Messeinrichtung dann in einfacher Weise kalibriert werden kann, wenn auch das Innere des Schlauchs Umgebungstemperatur aufweist. Dann muss die Temperatur, die über das Leiterelement erfasst wird, und die Umgebungstemperatur, die von dem Temperatursensor erfasst wird, identisch sein, was als Grundlage für eine Kalibrierung dienen kann.

Schließlich ist es bevorzugt, wenn die Messeinrichtung eine Übertragungseinrichtung aufweist, die ausgestaltet ist, drahtlos ein Signal zu einer Empfangseinrichtung zu übertragen, das eine Information enthält, die den Widerstand zwischen dem ersten elektrischen Anschluss und dem zweiten elektrischen Anschluss wiedergibt. Diese Information kann auch die Temperatur im Inneren des Schlauchs enthalten.

Auf diese Weise ist es möglich, dass mittels der Messeinrichtung erfasste Temperaturen im Schlauchinneren drahtlos zu einem zentralen Steuerungssystem übertragen werden, das eine Empfangseinrichtung aufweist.

Im Folgenden wird die vorliegende Erfindung anhand einer Zeichnung erläutert, die lediglich bevorzugte Ausführungsbeispiele der vorliegenden Erfindung zeigt, wobei
- Fig. 1: eine schematische Darstellung eines bevorzugten Ausführungsbeispiels eines erfindungsgemäßen Schlauchsystems ist,
- Fig. 2: eine schematische Seitenansicht eines bevorzugten Ausführungsbeispiels eines Schlauchs zeigt, der Teil eines erfindungsgemäßen Schlauchsystems ist, und
- Fig. 3: eine Querschnittsansicht des bevorzugten Ausführungsbeispiels eines Schlauchs aus Fig. 2 zeigt

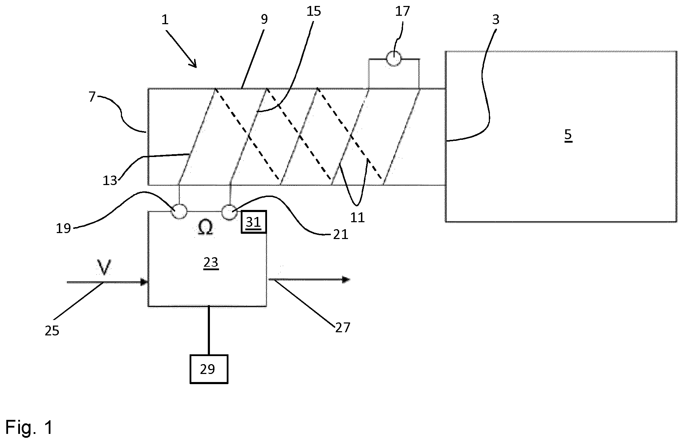

Figur 1 zeigt ein Ausführungsbeispiel eines erfindungsgemäßen Schlauchsystems, wobei dieses einen Schlauch 1 aufweist, der in dem hier beschriebenen Ausführungsbeispiel an einem ersten Ende 3 mit einem Anschlusselement 5 versehen ist. Das zweite Ende 7 des Schlauchs 1 ist hingegen hier als offenes Ende ausgebildet, kann aber ebenfalls mit einem Anschlusselement versehen sein. Der Schlauch 1 erstreckt sich somit zwischen dem ersten Ende 3 und dem zweiten Ende 7. Wie schematisch weiter dargestellt, weist der Schlauch 1 eine Wandung 9 auf, die ein Schlauchinneres begrenzt.

Wie weiter aus der schematischen Abbildung in Figur 1 zu erkennen ist, weist die Wandung 9 ein Leiterelement 11 auf, das in die Wandung 9 eingelassen ist und in dem hier gezeigten Ausführungsbeispiel einen ersten Abschnitt 13 und einen zweiten Abschnitt 15 umfasst, die beide helixförmig entlang der Wandung 9 verlaufen. Während in dem hier beschriebenen bevorzugten Ausführungsbeispiel, das Leiterelement 11 bzw. die dieses bildenden Abschnitte 13, 15 helixförmig verlaufen, können auch andere Verläufe gewählt werden. Es ist beispielsweise auch denkbar, dass das Leiterelement gradlinig entlang der Erstreckungsrichtung des Schlauchs verläuft.

Das Leiterelement 11 ist aus einem elektrisch leitfähigem Material wie beispielsweise Metall oder Stahl gebildet, wobei das Material des Leiterelements 11 einen temperaturabhängigen spezifischen Widerstand aufweist, so dass sich der Widerstand des Leiterelements 11 ändert, wenn sich die Temperatur eines Mediums, das durch das Schlauchinnere des Schlauchs 1 strömt, ändert.

Wenn das Leiterelement 11 als Stahlwendel ausgebildet ist, die helixförmig entlang der Wandung 9 des Schlauchs 1 verläuft, kann das Leiterelement 11 auch ein Verstärkungselement bilden, so dass die Wandung 9 versteift wird und der Schlauch 1 bei einer Druckdifferenz zwischen der Umgebung des Schlauchs und dem Schlauchinneren seine Querschnittsform beibehält. Bevorzugt hat der Schlauch 1 eine Unterdruckstabilität, bezogen auf Raumtemperatur, von mehr als -0,5 bar (rel.) und weiter bevorzugt von bis zu -0,95 bar (rel.). Dann wird durch das Leiterelement 11, das als Verstärkungselement ausgebildet ist, ein Kollabieren des Schlauchs bei Unterdruck im Inneren verhindert.

Wie weiter in Figur 1 zu erkennen ist, verlaufen die Abschnitte 13,15 des Leiterelements 11 im Wesentlichen parallel zueinander helixförmig zwischen dem ersten Ende 3 und dem zweiten Ende 7 des Schlauchs 1. Dabei ist zu erkennen, dass der erste Abschnitt 13 und der zweite Abschnitt 15 im Bereich des ersten Endes 3 an einer schematisch dargestellten Kontaktstelle 17 elektrisch miteinander verbunden sind, während an den Enden des ersten Abschnitts 13 und des zweiten Abschnitts 15, die benachbart zu dem zweiten Ende 7 des Schlauchs 1 angeordnet sind, ein erster elektrischer Anschluss 19 und ein zweiter elektrischer Anschluss 21 vorgesehen sind.

Wie weiter in Figur 1 zu erkennen ist, weist das Ausführungsbeispiel eines erfindungsgemäßen Schlauchsystems eine Messeinrichtung 23 auf, die mit dem ersten elektrischen Anschluss 19 und dem zweiten elektrischen Anschluss 21 des Leiterelements 11 verbunden ist. Die Messeinrichtung 23 ist ausgestaltet, aus einem elektrischen Signal, das zwischen dem ersten und dem zweiten elektrischen Anschluss 19, 21 erfasst wird, ein Ausgangssignal zu erzeugen, das ein Maß für den elektrischen Widerstand des Leiterelements 11 zwischen dem ersten elektrischen Anschluss 19 und dem zweiten elektrischen Anschluss 21 ist.

In dem hier dargestellten bevorzugten Ausführungsbeispiel weist das Leiterelement 11 den ersten Abschnitt 13 und den zweiten Abschnitt 15 auf, die benachbart zu dem ersten Ende 3 des Schlauchs 1 miteinander verbunden sind, so dass zwischen dem ersten elektrischen Anschluss 19 und dem zweiten elektrischen Anschluss 21 der gesamte Widerstand des Leiterelements 11 bestehend aus dem ersten Abschnitt 13 und dem zweiten Abschnitt 15 bestimmt werden kann. Aufgrund der Tatsache, dass hier der Widerstand des gesamten Leiterelements 11 erfasst wird, können auch geringe temperaturbedingte Änderungen des spezifischen Widerstands, die aufgrund einer nur geringen Temperaturänderung des Fluids im Inneren des Schlauchs 1 hervorgerufen werden, sicher erfasst werden, da der absolute Widerstand sich aufgrund der großen Länge des Leiterelements 11 im größtmöglichen Maß ändert.

In einem bevorzugten Ausführungsbeispiel kann das Signal, das ein Maß für den elektrischen Widerstand des Leiterelements 11 zwischen den elektrischen Anschlüssen 19, 21 ist, ein Spannungssignal sein, dass mittels einer Messbrücke gewonnen wird, in der der Widerstand des Leiterelements 11 zwischen den Anschlüssen 19, 21 ein Teilwiderstand in der Messbrücke ist. Es sind aber auch andere Möglichkeiten denkbar, um das Ausgangssignal, das ein Maß für den elektrischen Widerstand bildet, zu erzeugen.

Die Messeinrichtung 23 ist außerdem mit einer Spannungsversorgung 25 verbunden, um beispielsweise die Elektronik für die Messbrücke mit Spannung zu versorgen. Außerdem ist es bevorzugt, wenn die Messeinrichtung 23 ausgestaltet ist, ein Temperatursignal zu erzeugen, das an einer Schnittstelle 27 ausgegeben wird und das ein Maß für die Temperatur des Leiterelements 11 ist. Dies kann entweder ein analoges Spannungssignal sein oder ein digitales Signal. Andere Möglichkeiten sind ebenfalls denkbar. Es ist auch denkbar, dass an der Messeinrichtung 23 eine Anzeige (nicht dargestellt) vorgesehen ist, an der die Temperatur des Leiterelements 11 angezeigt wird.

Ferner weist erfindungsgemäß das Schlauchsystem 1 an der Messeinrichtung 23 einen Temperatursensor 29 auf, mit dem die Temperatur in der Umgebung des Schlauchsystems erfasst werden kann. Dieser Temperatursensor 29 dient dazu, das System zu kalibrieren, wobei dazu in der Weise vorgegangen werden kann, dass dann, wenn das Schlauchinnere und die Umgebung die gleiche Temperatur haben, das Signal des Temperatursensors 29 durch die Messeinrichtung 23 erfasst wird und mit dem an den Anschlüssen 19, 21 erfassten Signal so abgeglichen wird, dass dieses Signal der erfassten Umgebungstemperatur entspricht.

Schließlich kann die Messeinrichtung 23 des hier dargestellten bevorzugten Ausführungsbeispiels eines Schlauchsystems mit einer Übertragungseinrichtung 31 versehen sein, die ausgestaltet ist, drahtlos ein Signal zu einer entfernt von dem Schlauchsystem angeordneten Empfangseinrichtung zu übertragen, wobei dieses Signal eine Information enthält, die den Widerstand zwischen dem ersten elektrischen Anschluss und dem zweiten elektrischen Anschluss wiedergibt oder die daraus bestimmte Temperatur des Leiterelements 11.

Mit dem erfindungsgemäßen Schlauchsystem 1 ist es in einfacher Weise möglich, die Temperatur im Schlauchinneren zu bestimmen, ohne dass dafür innerhalb der Wandung 9 in komplizierter Weise Sensoreinrichtungen angebracht werden müssen. Es ist vielmehr vollkommend ausreichend, den elektrischen Leiter in der Wandung während des Produktionsprozesses einzufügen, wobei dann, wenn die Anschlüsse am Ende vorgesehen sind, eine einfache Verbindung mit der Messeinrichtung 23 ermöglicht wird.

Im vorliegenden Ausführungsbeispiel ist das Leiterelement 11 als drahtförmig beschrieben worden. Es ist aber auch denkbar, dass das Leiterelement 11 als ein Geflecht ausgebildet ist.

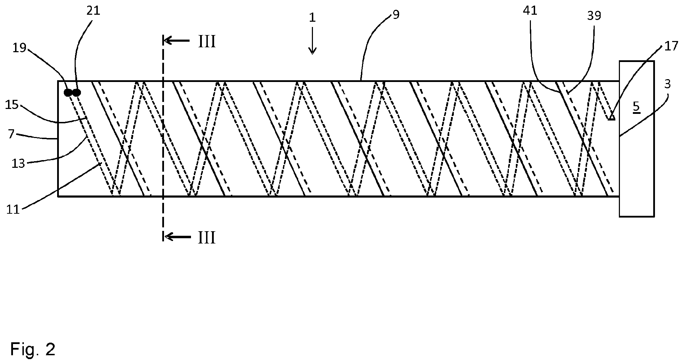

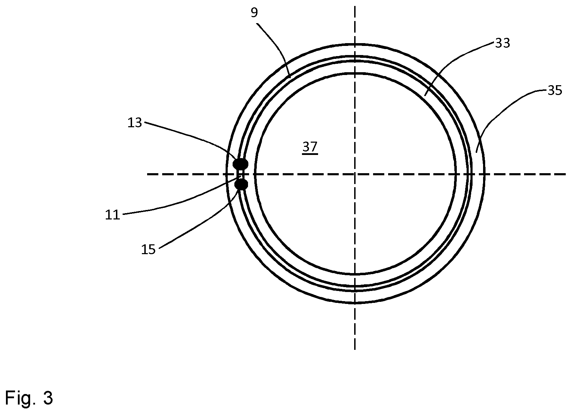

In den Figuren 2 und 3 ist ein bevorzugtes Ausführungsbeispiel eines Schlauchs 1 eines erfindungsgemäßen Schlauchsystems dargestellt, wobei bei dem hier dargestellten Ausführungsbeispiel die Wandung 9 des Schlauchs 1 eine Innenschicht 33 sowie eine Außenschicht 35 aufweist, wobei die Innenschicht 33 des Schlauchinneren 37 begrenzt, während die Außenschicht 35 die Innenschicht 33 umgibt und auch an der Innenschicht 33 anliegt.

In dem hier beschriebenen Ausführungsbeispiel sind die Innenschicht 33 und die Außenschicht 35 als homogene Einzelschicht ausgebildet. Es ist aber auch denkbar, dass die Innenschicht und/oder die Außenschicht mehrschichtig ausgebildet sind.

Weiterhin ist zwischen der Außenschicht 35 und der Innenschicht 33 das Leiterelement 11 angeordnet, das, wie in Figur 2 zu erkennen ist, wiederum aus einem ersten und einem zweiten Abschnitt 13, 15 gebildet ist, die helixförmig und parallel zueinander verlaufend in der Wandung 9 umlaufen. Wie schon in Zusammenhang mit Figur 1 beschrieben, sind der erste Abschnitt 13 und der zweite Abschnitt 15 des Leiterelements 11 benachbart zu dem ersten Ende des Schlauchs 1 an einer Kontaktstelle 17 miteinander kurzgeschlossen, während benachbart zu dem zweiten Ende 7 des Schlauchs 1 der erste elektrische Anschluss 19 und der zweite elektrische Anschluss 21 vorgesehen sind, über die der Schlauch 1 mit der Messeinrichtung 23 verbunden werden kann.

Wie weiter in Figur 2 zu erkennen ist, weist dieses bevorzugte Ausführungsbeispiel eines Schlauchs 1 am ersten Ende 3 wiederum ein Anschlusselement 5 auf. Außerdem ist die Wandung 9 des Schlauchs 1 derart aufgebaut, dass sowohl die Innenschicht 33 als auch die Außenschicht 35 aus helixförmig verlaufenden Streifen ausgebildet ist, wobei die Kanten 39 der Streifen, die die Innenschicht 33 bilden, versetzt zu den Kanten 41 angeordnet sind, die an den Streifen vorhanden sind, die die Außenschicht 35 bilden.

Außerdem kann auch bei dem in den Figuren 2 und 3 dargestellten Ausführungsbeispiel eines Schlauchs 1 für ein erfindungsgemäßes Schlauchsystem das Leiterelement 11 bzw. die diese bildenden Abschnitte 13, 15 als Stahlwendel ausgebildet sein, so dass das Leiterelement 11 als Verstärkungselement dient, das dem Schlauch 1 eine Stabilität gegen ein Kollabieren verleiht, wenn im Schlauchinneren 37 im Vergleich zu der Umgebung ein Unterdruck herrscht.

Insbesondere, wenn die Innenschicht 33 und die Außenschicht 35 aus helixförmig angeordneten Streifen ausgebildet ist, kann an das Leiterelement 11 in Form der Stahlwendel in einfacher Weise während der Herstellung mit zwischen die Innenschicht 33 und die Außenschicht 35 eingebracht werden, so dass gegenüber einem herkömmlichen Schlauch mit einem Verstärkungselement keine zusätzlichen Herstellungsschritte notwendig sind, um eine Temperaturmessung zu ermöglichen. Es ist dann nach der eigentlichen Herstellung des Schlauchs 1 lediglich erforderlich, an einem Ende die beiden Abschnitte 11, 15 miteinander kurzzuschließen und an dem anderen Ende 7 den ersten elektrischen Anschluss 19 und den zweiten elektrischen Anschluss 21 vorzusehen. Die Erfindung ermöglicht somit, in einfacher Weise eine Temperaturmessung in einem Schlauch vorzusehen.

### Bezugszeichenliste:

- 1: Schlauch
- 3: erstes Ende
- 5: Anschlusselement
- 7: zweites Ende
- 9: Wandung
- 11: Leiterelement
- 13: erster Abschnitt
- 15: zweiter Abschnitt
- 17: Kontaktstelle
- 19: erster elektrischer Anschluss
- 21: zweiter elektrischer Anschluss
- 23: Messeinrichtung
- 25: Spannungsversorgung
- 27: Schnittstelle
- 29: Temperatursensor
- 31: Übertragungseinrichtung
- 33: Innenschicht
- 35: Außenschicht
- 37: Schlauchinneres

## Patentansprüche

1. Schlauchsystem,
mit einem Schlauch (1), der sich zwischen einem ersten und einem zweiten Ende (3, 7) erstreckt,
wobei der Schlauch (1) eine Wandung (9) aufweist,
wobei in der Wandung (9) ein Leiterelement (11) eingelassen ist, das sich zwischen dem ersten und dem zweiten Ende (3, 7) erstreckt,
wobei das Leiterelement (11) aus einem elektrisch leitfähigen Material mit einem temperaturabhängigen spezifischen Widerstand ausgebildet ist und
wobei das Leiterelement (11) einen ersten elektrischen Anschluss (19) und einen zweiten elektrischen Anschluss (21) aufweist, die entlang des Leiterelements (11) beabstandet sind, und
mit einer Messeinrichtung (23), die mit dem ersten und mit dem zweiten elektrischen Anschluss (19, 21) verbunden ist und die ausgestaltet ist, aus einem elektrischen Signal, das zwischen dem ersten und dem zweiten elektrischen Anschluss (19, 21) erfasst wird, ein Ausgangssignal zu erzeugen, das ein Maß für den elektrischen Widerstand des Leiterelements (11) zwischen dem ersten elektrischen Anschluss (19) und dem zweiten elektrischen Anschluss (21) ist,
wobei das Leiterelement (11) einen ersten Abschnitt (13) und einen zweiten Abschnitt (15) aufweist,
wobei sich sowohl der erste Abschnitt (13) als auch der zweite Abschnitt (15) von dem ersten zu dem zweiten Ende (3, 7) des Schlauchs (1) erstrecken,
wobei der erste Abschnitt (13) und der zweite Abschnitt (15) im Bereich des ersten Endes (3) elektrisch miteinander verbunden sind und
wobei am Ende des ersten Abschnitts (13), das am zweiten Ende (7) des Schlauchs (1) angeordnet ist, der erste elektrische Anschluss (19) ausgebildet ist und am Ende des zweiten Abschnitts (15), das am zweiten Ende (7) des Schlauchs (1) ausgebildet ist, der zweite elektrische Anschluss (21) ausgebildet ist,
**dadurch gekennzeichnet, dass**
die Messeinrichtung (23) einen Temperatursensor (29) zu Erfassung der Temperatur der Umgebung des Schlauchs (1) aufweist.

2. Schlauchsystem nach Anspruch 1, wobei die Messeinrichtung (23) ausgestaltet ist, aus dem Ausgangssignal ein Temperatursignal zu erzeugen, dass ein Maß für die Temperatur des Leiterelements (11) zwischen dem ersten und dem zweiten elektrischen Anschluss (19, 21) ist.

3. Schlauchsystem nach einem der Ansprüche 1 oder 2, wobei das Leiterelement (11) drahtförmig ausgestaltet ist.

4. Schlauchsystem nach Anspruch 3, wobei das Leiterelement (11) als Stahlwendel ausgebildet ist.

5. Schlauchsystem nach einem der Ansprüche 3 oder 4, wobei sich das Leiterelement (11) helixförmig entlang der Wandung (9) des Schlauchs (1) erstreckt.

6. Schlauchsystem nach einem der Ansprüche 1 oder 2, wobei das Leiterelement (11) als Geflecht ausgebildet ist.

7. Schlauchsystem nach einem der Ansprüche 1 bis 6, wobei das Leiterelement (11) als Verstärkungselement ausgebildet ist, sodass die Wandung (9) des Schlauchs (1) versteift ist und der Schlauch (1) bei einer Druckdifferenz zwischen der Umgebung des Schlauchs und dem Schlauchinneren seine Querschnittsform beibehält und insbesondere eine Unterdruckstabilität, bezogen auf Raumtemperatur, von mehr als - 0,5 bar (rel.) und weiter bevorzugt von bis zu -0,95 bar (rel.) hat.

8. Schlauchsystem nach einem der Ansprüche 1 bis 7, wobei die Wandung (9) eine Innenschicht (33) und eine Außenschicht (35) aufweist,
wobei die Innenschicht (33) das Schlauchinnere (37) begrenzt,
wobei die Außenschicht (35) an der von dem Schlauchinneren (37) abgewandten Seite der Innenschicht (33) anliegt und
wobei das Leiterelement (11) zwischen der Innenschicht (33) und der Außenschicht (35) angeordnet ist.

9. Schlauchsystem nach Anspruch 8, wobei die Innenschicht (33) und/oder die Außenschicht (35) aus einem helixförmig gewickelten Streifen gebildet sind.

10. Schlauchsystem nach einem der Ansprüche 1 bis 9, wobei die Messeinrichtung (23) einen Übertragungseinrichtung (31) aufweist, die ausgestaltet ist, drahtlos ein Signal zu einer Empfangseinrichtung zu übertragen, das eine Information enthält, die den Widerstand zwischen dem ersten elektrischen Anschluss (19) und dem zweiten elektrischen Anschluss (21) wiedergibt.

## Claims

1. Hose system,
with a hose (1) extending between a first and a second end (3, 7),
wherein the hose (1) has a wall (9),
wherein a conductor element (11) is embedded in the wall (9) which extends between the first and the second end (3, 7),
wherein the conductor element (11) is formed of an electrically conductive material with a temperature-dependent resistivity and
wherein the conductor element (11) has a first electrical connection (19) and a second electrical connection (21) spaced along the conductor element (11), and
with a measuring device (23) which is connected to the first and to the second electrical terminal (19, 21) and which is designed to generate an output signal from an electrical signal which is detected between the first and the second electrical terminal (19, 21), which is a measure of the electrical resistance of the conductor member (11) between the first electrical terminal (19) and the second electrical terminal (21),
wherein the conductor element (11) has a first section (13) and a second section (15),
wherein both the first portion (13) and the second portion (15) extend from the first to the second end 3, 7) of the hose (1),
wherein the first section (13) and the second section (15) are electrically connected to each other in the region of the first end (3), and
wherein at the end of the first portion (13), which is located at the second end (7) of the hose (1), the first electrical connection (19) is formed, and at the end of the second portion (15), which is formed at the second end (7) of the hose (1), the second electrical connection (21) is formed,
**characterized by the fact that**
the measuring device (23) has a temperature sensor (29) for detecting the temperature of the vicinity of the hose (1).

2. Hose system according to requirements 1, wherein the measuring device (23) is designed to generate a temperature signal from the output signal, which is a measure of the temperature of the conductor member (11) between the first and the second electrical terminal (19, 21).

3. Hose system according to one of the requirements 1 or 2, wherein the conductor element (11) is wire-shaped.

4. Hose system according to requirements 3, whereby the conductor element (11) is designed as a steel helix.

5. Hose system according to one of the requirements 3 or 4, wherein the conductor element (11) extends helix-like along the wall (9) of the hose (1).

6. Hose system according to one of the requirements 1 or 2, wherein the conductor element (11) is designed as a braid.

7. Hose system according to one of the requirements 1 until 6, wherein the conductor element (11) is designed as a reinforcing member, so that the wall (9) of the hose (1) is stiffened and the hose (1) retains its cross-sectional shape in the event of a pressure difference between the surroundings of the hose and the inside of the hose, and in particular has a negative pressure stability, in relation to room temperature, of more than -0.5 bar (rel.) and preferably of up to -0.95 bar (rel.).

8. Hose system according to one of the requirements 1 up to 7, wherein the wall (9) has an inner layer (33) and an outer layer (35),
wherein the inner layer (33) limits the inner tube (37),
wherein the outer layer (35) lies on the side of the inner layer (33) facing away from the inside of the hose (37), and
wherein the conductor element (11) is arranged between the inner layer (33) and the outer layer (35).

9. The hose system according to claim 8, wherein the inner layer (33) and/or the outer layer (35) are formed of a helix-wound strip.

10. Hose system according to one of the requirements 1 to 9, wherein the measuring device (23) has a transmission device (31) which is designed to transmit wirelessly a signal to a receiving device which contains information which reflects the resistance between the first electrical terminal (19) and the second electrical terminal (21).

## Revendications

1. Système de tuyaux,
avec un tuyau (1) s'étendant entre une première et une seconde extrémité (3, 7),
où le tuyau (1) possède un mur (9),
où un élément conducteur (11) est intégré dans le mur (9) qui s'étend entre la première et la seconde extrémité (3, 7),
où l'élément conducteur (11) est constitué d'un matériau électriquement conducteur avec une résistivité dépendant de la température et
où l'élément conducteur (11) possède une première connexion électrique (19) et une seconde connexion électrique (21) espacées le long de l'élément conducteur (11), et
avec un dispositif de mesure (23) relié à la première et à la deuxième borne électrique (19, 21) et conçu pour générer un signal de sortie à partir d'un signal électrique détecté entre la première et la deuxième borne électrique (19, 21), mesurant la résistance électrique de l'élément conducteur (11) entre la première borne électrique (19) et la seconde borne électrique (21),
où l'élément conducteur (11) possède une première section (13) et une seconde section (15),
où la première portion (13) et la seconde partie (15) s'étendent de la première à la seconde extrémité 3, 7) du tuyau (1),
où la première section (13) et la seconde section (15) sont reliées électriquement l'une à l'autre dans la région de la première extrémité (3), et
où à l'extrémité de la première portion (13), qui se trouve à la deuxième extrémité (7) du tuyau (1), la première connexion électrique (19) est formée, et à l'extrémité de la seconde portion (15), qui est formée à la seconde extrémité (7) du tuyau (1), la seconde connexion électrique (21) se forme,
**caractérisée par le fait que**
L'appareil de mesure (23) possède un capteur de température (29) pour détecter la température à proximité du tuyau (1).

2. Système de tuyaux selon les exigences 1, où le dispositif de mesure (23) est conçu pour générer un signal de température à partir du signal de sortie, qui est une mesure de la température de l'élément conducteur (11) entre la première et la deuxième borne électrique (19, 21).

3. Système de tuyau selon l'une des exigences 1 ou 2, où l'élément conducteur (11) est en forme de fil.

4. Système de tuyaux selon les exigences 3, où l'élément conducteur (11) est conçu comme une hélice en acier.

5. Système de tuyau selon l'une des exigences 3 ou 4, où l'élément conducteur (11) s'étend en hélice le long de la paroi (9) du tuyau (1).

6. Système de tuyau selon l'une des exigences 1 ou 2, où l'élément conducteur (11) est conçu comme une tresse.

7. Système de tuyau selon l'une des exigences 1 jusqu'à 6, où l'élément conducteur (11) est conçu comme un élément d'armaturage, de sorte que la paroi (9) du tuyau (1) est rigidifiée et que le tuyau (1) conserve sa forme en section transversale en cas de différence de pression entre l'environnement du tuyau et l'intérieur du tuyau, et en particulier possède une stabilité à la pression négative, par rapport à la température ambiante, supérieure à -0,5 bar (rel.) et de préférence jusqu'à -0,95 bar (rel.).

8. Système de tuyau selon l'une des exigences 1 jusqu'à 7, où le mur (9) comporte une couche intérieure (33) et une couche extérieure (35),
où la couche interne (33) limite le tube intérieur (37),
où la couche extérieure (35) se trouve du côté de la couche intérieure (33) tournée à l'opposé de l'intérieur du tuyau (37), et
où l'élément conducteur (11) est disposé entre la couche intérieure (33) et la couche extérieure (35).

9. Le système de tuyau selon la revendication 8, où la couche intérieure (33) et/ou la couche extérieure (35) sont formées d'une bande enroulée en hélice.

10. Système de tuyau selon l'une des exigences 1 jusqu'à 9, où le dispositif de mesure (23) possède un dispositif de transmission (31) conçu pour transmettre sans fil un signal à un dispositif récepteur contenant des informations reflétant la résistance entre la première borne électrique (19) et la seconde borne électrique (21).
